# EUROPÄISCHE PATENTSCHRIFT

(11) **EP 2 224 576 B1**
(45) Veröffentlichungstag und Bekanntmachung des Hinweises auf die Patenterteilung: **01.04.2020**
(21) Anmeldenummer: 09015223.2
(22) Anmeldetag: 09.12.2009
(51) Int. Cl.: H02K 1/14, H02K 1/18, H02K 3/28, H02K 15/02

(54) **Stator für einen elektronisch kommutierten Gleichstrommotor**
Stator for an electronically commuted DC motor
Stator pour un moteur à courant continu commuté électroniquement

(30) Priorität: 26.02.2009 DE 102009010782
(43) Veröffentlichungstag der Anmeldung: 01.09.2010
(73) Patentinhaber: Bühler Motor GmbH, 90459 Nürnberg (DE)
(72) Erfinder: Guttenberger, Richard, Obermässing 91171 Greding (DE); Suttner-Reimann, Armin, 91126 Schwabach (DE)

(56) Entgegenhaltungen:
- WO-A1-2007/107131
- WO-A1-2008/047942
- DE-A1-102005 051 506
- JP-A- 2007 259 620
- JP-A- 2008 086 172
- JP-A- 2008 278 653

## Beschreibung

Die Erfindung betrifft einen Stator (10) für einen elektronisch kommutierten Gleichstrommotor, mit einer Mehrzahl von als Einzelteile ausgebildeten Statorpolen (1), bestehend aus einem Polkern (25), Polschuhen (26) und Rückschlussabschnitten (27), wobei die Rückschlussabschnitte (27) der Statorpole (1) ineinandergreifende Profilierungen aufweisen an welchen sie so einander anliegen, dass sie miteinander einen hohlzylindrischen Rückschluss (35) bilden, wobei die Polkerne (25) radial nach innen gerichtet an die Rückschlussabschnitte (27) anschließen, dass die einzelnen Statorpole (1) jeweils mit einer Isolierung und einer Wicklung versehen sind und dass die bewickelten Statorpole (1) durch ein nicht als Motorgehäuse dienendes Halteteil zusammengehalten werden.

Aus der DE 10 2005 051 506 A1 ist ein gattungsgemäßer Stator bekannt, bei dem zwei aus Kunststoff bestehende Halteteile mit axial vorspringenden Stiften vorgesehen sind, die in Löcher der Rückschlussabschnitte der Statorpole eingreifen und diese dadurch miteinander verbinden. Diese Kunststoffhalteteile können lediglich als Justagemittel für die Statorpole dienen, diese aber nicht ausreichend miteinander verspannen. Für die Verspannung der Pole müssen diese nach bekannter Weise im Motorgehäuse eingepresst werden. Es ist beispielhaft bekannt Motorgehäuse durch Aufschrumpfen auf die Statorpole zu montieren oder Statorpole mit nachgebenden Vorsprüngen zu versehen um ein Einpressen in das Motorgehäuse zu ermöglichen. Alle diese bekannten Verfahren lassen sich jedoch nur sehr aufwändig durchführen.

Aus der nächstliegenden US 2010 / 007 236 ist ein Stator für einen elektronisch kommutierten Gleichstrommotor mit einer Mehrzahl von als Einzelteile ausgebildeten Statorpolen, bestehend aus einem Polkern, Polschuhen und Rückschlussabschnitten, wobei die Rückschlussabschnitte der Statorpole ineinandergreifende Profilierungen aufweisen, an welchen die Rückschlussabschnitte so einander anliegen, dass sie miteinander einen hohlzylindrischen Rückschluss bilden, wobei die Polkerne radial nach innen gerichtet an die Rückschlussabschnitte anschließen, dass die einzelnen Statorpole jeweils mit einer Isolierung und einer Wicklung versehen sind und dass die bewickelten Statorpole durch ein Halteteil zusammengehalten werden, dadurch gekennzeichnet, dass das Halteteil ein metallischer Spannring ist, der unter Vorspannung um den gesamten Umfang des hohlzylindrischen Rückschluss herum gelegt ist und die Statorpole miteinander verspannt, bekannt.

Die WO 2007 / 107131 A1 offenbart einen Stator, gebildet aus mehreren ineinandergreifenden Statorpolen, die über einen Spannring zusammengehalten sind.

Aus der JP 2008 278653 A ist ein Stator eines Motors mit mehreren Einzel-Statorpolen, die mittels eines Spannrings zusammengehalten werden, bekannt. Der Spannring hat regelmäßige Durchbrüche.

Die JP 2007 259620 A offenbart einen Stator eines Motors mit mehreren Einzel-Statorpolen, die mittels eines Spannringes zusammengehalten werden.

Aus der JP 2008 086172 A ist ein Stator eines Motors mit mehreren Einzel-Statorpolen, die mittels eines Spannringes zusammengehalten werden, bekannt. Der Spannring hat regelmäßige Durchbrüche verschiedener Ausgestaltungen.

Aufgabe der vorliegenden Erfindung ist es einen Stator für einen elektronisch kommutierten Gleichstrommotor darzustellen, der einfach und zuverlässig montiert werden kann und der die Montage des Stators im Motorgehäuse erleichtert.

Diese Aufgabe wird erfindungsgemäß durch das Kennzeichen des Anspruchs 1 gelöst. Da das Halteteil ein metallischer Spannring ist, der unter Vorspannung um den gesamten Umfang des hohlzylindrischen Rückschlusses herum gelegt ist, können die Statorpole einfach miteinander verspannt werden, dabei wird der Spannring weder als Rückschlussnoch als Motorgehäuseelement benötigt und kann daher für seine primäre Aufgabe ausgelegt und optimiert werden. Da der Stator nicht mehr notwendigerweise mit dem Motorgehäuse verspannt werden muss und der Spannring sowie auch das Motorgehäuse nicht als Rückschlusselement dienen muss, besteht eine größere Gestaltungsfreiheit auch hinsichtlich der Gehäusedichtigkeit und des Gewichts. Der Spannring 4 ist darüber hinaus mit Anschraubösen 8 einstückig, die rechtwinklig abgewinkelt sind und sich radial nach außen erstrecken.

Weiterbildungen und vorteilhafte Ausgestaltungen der Erfindung werden in den Unteransprüchen dargestellt.

Ein Ausführungsbeispiel der Erfindung wird nachfolgend anhand der Zeichnung näher erläutert. Es zeigen:
- Fig. 1: einen Statorpol,
- Fig. 2: eine erste Endkappe mit Schlitz,
- Fig. 3: eine zweite Endkappe ohne Schlitz,
- Fig. 4: die zweite Endkappe aus einer anderen Perspektive,
- Fig. 5: einen Statorpol mit montierten Endkappen,
- Fig. 6: zu einem Stator zusammengefügte Statorpole,
- Fig. 7: zu einem Stator zusammengefügte Statorpole mit montierten Endkappen,
- Fig. 8: der Stator aus Fig. 7 mit einem Spannring,
- Fig. 9: der Stator aus Fig. 8 mit einem Isolierring,
- Fig. 10: der Spannring als Einzelteil,
- Fig. 11: der montierte Spannring mit Stator ohne Endkappen,
- Fig. 12: der Stator nach Fig. 11 aus einer anderen Perspektive mit einem weggelassenen Pol,
- Fig. 13: den Isolierring als Einzelteil,
- Fig. 14: den Isolierring aus einer anderen Perspektive,
- Fig. 15: den Stator in einem Motorgehäuse angeordnet ohne Isolierring,
- Fig. 16: den Stator nach Fig. 15 mit Isolierring,
- Fig. 17: den Stator nach Fig. 16 mit einer Leiterplatte und
- Fig. 18: den Stator nach Fig. 17 mit geschlossenem Motorgehäuse.

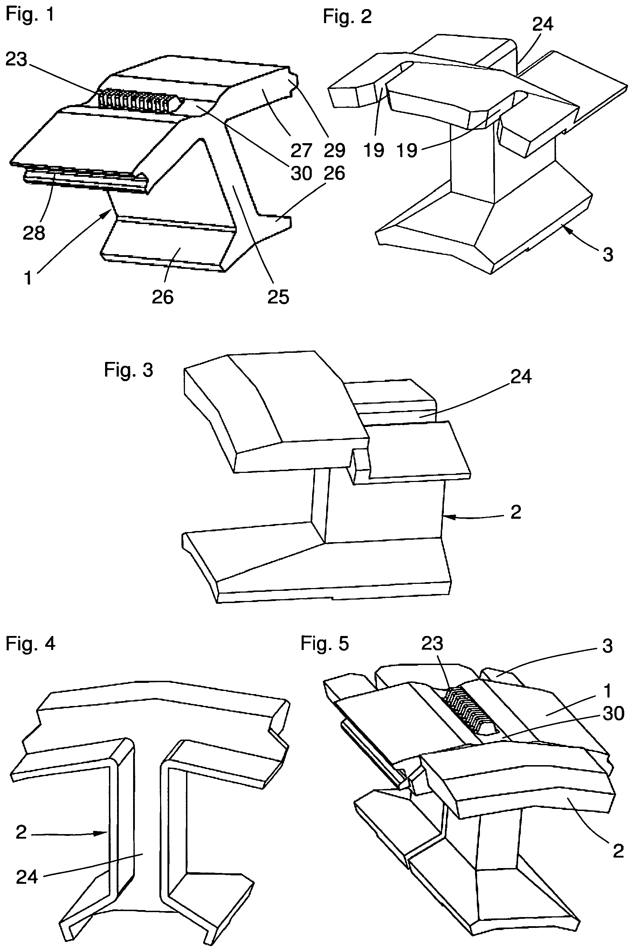

Fig. 1 zeigt einen Statorpol 1, bestehend aus einem Polkern 25, Polschuhen 26, Rückschlussabschnitten 27, die ineinander passende Profilierungen in Form eines konkaven Profils 28 und eines konvexen Profils 29 aufweisen, einer grabenförmigen Ausnehmung 30 aus der ein Vorsprung 23 hervortritt. Der Vorsprung 23 umfasst nicht die gesamte Länge des Statorpols 1, sondern ist mittig angeordnet und belässt an beiden Enden einen Aufnahmeraum. Die Statorpole können sowohl als stanzpaketierte Teile als auch als pulvergepresste Teile ausgeführt sein.

Fig. 2 zeigt eine Endkappe 3, mit einem Aufnahmeraum 24 zur einseitigen Aufnahme des Statorpols, zusätzliche umfasst die Endkappe 3 Aufnahmebereiche für einen Wickelkopf einer Statorwicklung und Schlitze 19 zur Fixierung von Wicklungsenden der Statorwicklung.

Fig. 3 zeigt eine weitere Endkappe 2, die ohne Schlitze ausgeführt ist, im übrigen aber wie die Endkappe 3 ausgebildet ist.

Fig. 4 zeigt die Endkappe 2 aus einer anderen Perspektive.

Fig. 5 stellt einen Statorpol 1 mit auf dessen gegenüberliegenden Stirnseiten montierten Endkappen 2, 3 dar. Endkappen dieser Art sind bekannt und werden in vielfältiger Ausgestaltung verwendet.

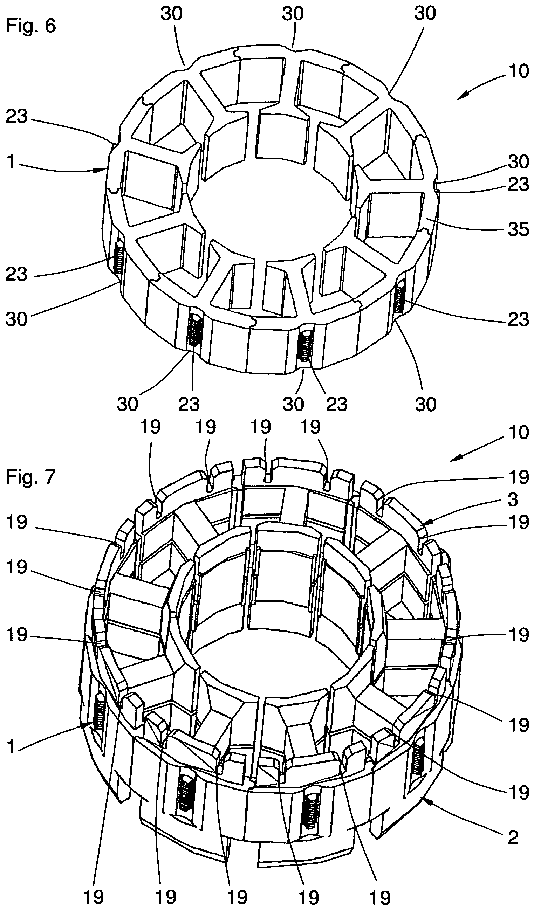

Fig. 6 zeigt zur Veranschaulichung einen aus neun Statorpolen zusammengesetzten Statorring ohne Endkappen und ohne Wicklung. In der dargestellten Form liegt der Stator in keinem Montageschritt vor, weil zunächst die Endkappen und die Wicklung aufgebracht werden.

Fig. 7 zeigt den Stator aus Fig. 6 mit montierten Endkappen 2 und 3. Die Wicklung ist der Einfachheit halber weggelassen. Die Endkappen erstrecken sich nicht in einen radialen Bereich zwischen Statorpol bzw. Polschuh und einem hier nicht dargestellten Rotor. Alle Endkappen 3 mit Schlitzen 19 sind auf der gleichen Seite der Statorpole angeordnet und alle Endkappen 2 ohne Schlitze auf der gegenüberliegenden Seite.

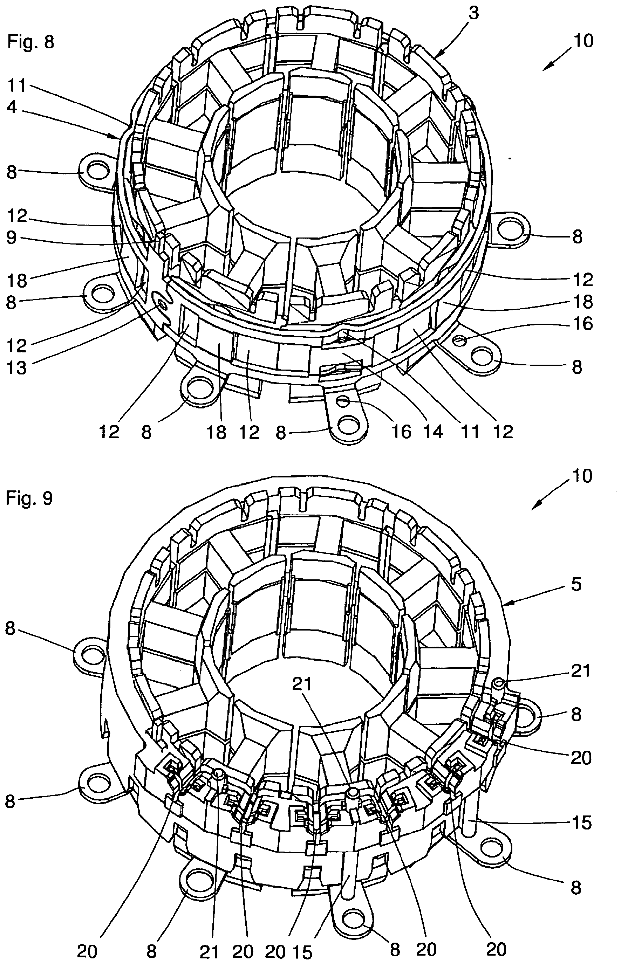

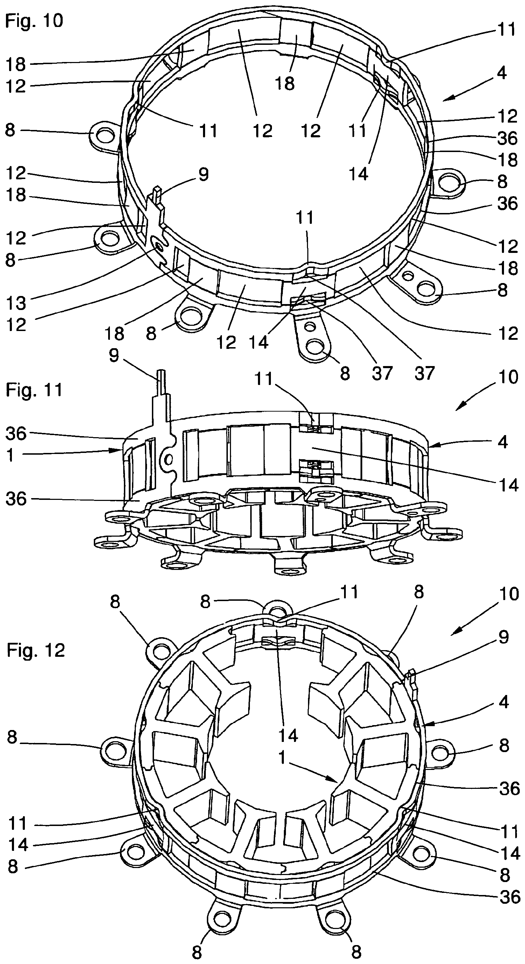

Fig. 8 zeigt die Anordnung gemäß Fig. 7 mit zusätzlich montiertem Spannring 4, der als Halteteil für die Statorpole dient. In Fig. 10 ist der Spannring 4 als Einzelteil dargestellt. Der Spannring ist im gezeigten Beispiel aus einem gestanzten Blechstreifen gerollt und an den Enden mechanisch verbunden. Die Verbindungsstelle 13 ist als verstemmter Knopf ausgebildet. Der Spannring besteht im wesentlichen aus zwei Ringbereichen 36, die über Brücken 18 miteinander verbunden sind. Die Brücken 18 sind in ihrer Mitte geringfügig radial nach innen verformt, so dass eine radiale Vorspannung gegeben ist, die nach der Montage eine spielfreie Verbindung zwischen dem Spannring und den Statorpolen sicherstellt. An drei Stellen ist die Verbindung zwischen den beiden Ringbereichen 36 durch Aussparungen 37 partiell unterbrochen, so dass Stege 14 verbleiben und H-förmige Verbindungsbereiche zwischen den Ringbereichen 36 verbleiben. Die Ringbereiche 36 sind auf den Umfangsabschnitten gegenüber den Stegen 14 radial nach innen verformt. Die axial nach innen verformten Bereiche dienen als Axialsicherungsstege 11 zur axialen Fixierung an den Vorsprüngen 23 der Statorpole 1. Der Spannring 4 ist darüber hinaus mit Anschraubösen 8 einstückig, die rechtwinklig abgewinkelt sind und sich radial nach außen erstrecken. Die Anschraubösen 8 sind in den Umfangsabschnitten angeordnet, in denen Brücken 18 oder Stege 14 zwischen den Ringbereichen 36 vorhanden sind. Die Anschraubösen 8 dienen als Befestigungsmöglichkeit des montierten Stators in einem Motorgehäuse. Weiter sind Justagedurchbrüche 16 parallel zu den Anschraubösen 8 vorgesehen, die für eine genaue Lagezuordnung des Stators im Motorgehäuse notwendig sind. Der Spannring 4 umfasst einen Sternpunktanschluss 9 der axial vorspringt. Der Spannring kann somit als Zusatzfunktion als elektrischer Sternpunktanschluss 9 für die Statorwicklung dienen.

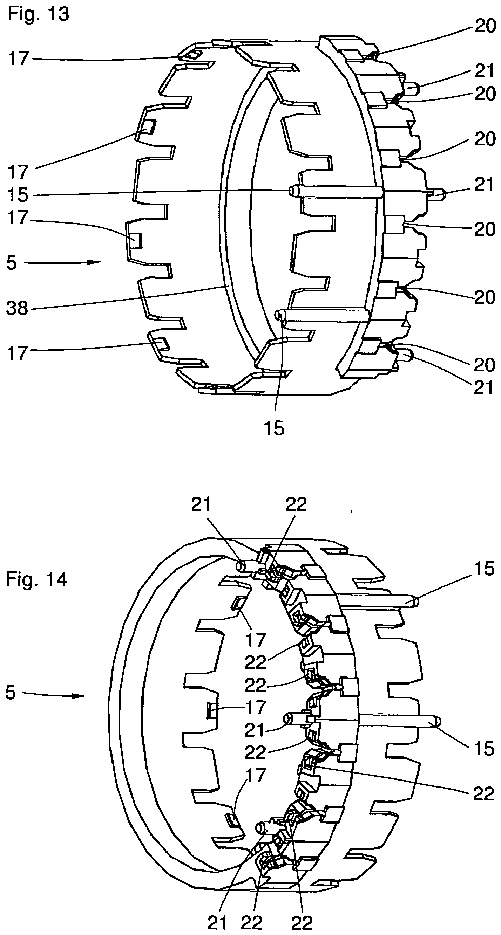

Fig. 9 zeigt die Anordnung gemäß Fig. 8 mit zusätzlich montiertem Isolierring 5, der über den Spannring 4 geschoben und daran fixiert ist. In den Fig. 13 und 14 ist der Isolierring 5 als Einzelteil dargestellt. Der Isolierring weist an einem ersten axialen Ende an seinem Innenumfang einen durchmesserreduzierten Bereich auf, der einen Anschlagring 38 bildet. An dem gegenüberliegenden axialen Ende ist der Isolierring mehrfach unterbrochen, um eine radiale Nachgiebigkeit für seine Montage auf den Stator zu erreichen. An mehreren durch die Unterbrechungen verbleibenden Zacken sind am Innenumfang Schnapphaken 17 angeformt. Der Bereich zwischen den Schnapphaken und dem Anschlagring 38 ist als Aufnahmeraum für den Spannring 4 vorgesehen. Mit dem Isolierring 5 sind Justagestifte 15 mitgeformt, die in die Justagedurchbrüche 16 des Spannrings fügbar sind und somit eine genaue Ausrichtung ermöglichen. Auf der axial gegenüberliegenden Seite sind Justagestifte 21 mitgeformt, die zur Justage einer Leiterplatte dienen. Der Isolierring 5 weist weiter Schlitze 20 zur Aufnahme der Wicklungsenden der Statorwicklungen auf. An die Innenbereiche der Schlitze 20 schließen Aufnahmen 22 für Schneidklemmkontakte an, die auf der Leiterplatte befestigt sind. Die Schlitze 20 fluchten mit den Schlitzen 19 der Endkappen 3 und sind entsprechend auf der gleichen Seite der Statorpole montiert.

Fig. 11 zeigt den vereinfacht dargestellten Stator 10 ohne Endkappen und Wicklung mit montiertem Spannring 4. Die Axialsicherungsstege 11 nehmen den Raum von Ausnehmungen 30 ein und halten den Spannring 4 axial an den Vorsprüngen 23 an den Statorpolen fest.

Fig. 12 zeigt eine andere Perspektive des Stators gemäß Fig. 11, wobei ein Pol zur besseren Veranschaulichung weggelassen ist. Deutlich zu erkennen ist, dass der Steg 14 die Umfangskontur des Spannrings 4 beibehält während die Axialsicherungsstege 11 nach innen verformt sind. Um diese Form zu erhalten müssen die Axialsicherungsstege 11 gegenüber der Ursprünglichen Form gestreckt sein.

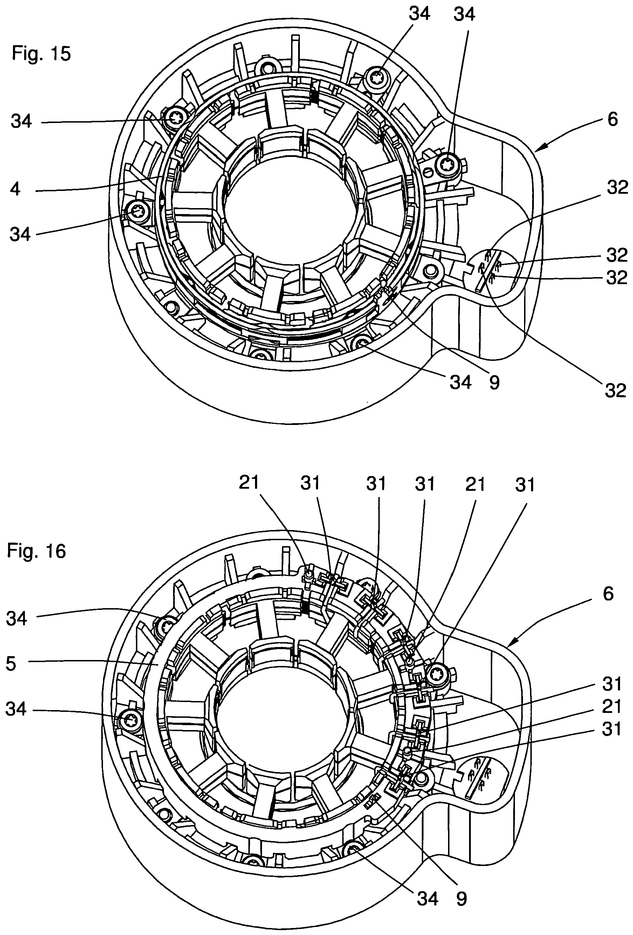

Fig. 15 zeigt den Stator 10, der im Motorgehäuse 6 über Schrauben 34 axial montiert ist. Hierbei ist der Stator ohne Isolierring dargestellt. In einem radial an den Stator anschließenden Bereich des Motorgehäuses 6 sind Steckerstifte 32 montiert.

Fig. 16 zeigt die Anordnung aus Fig. 15 mit Isolierring 5, wobei Schneidklemmkontakte 31 dargestellt sind, die in diesem Montagezustand tatsächlich nicht ohne Leiterplatte vorgesehen sind.

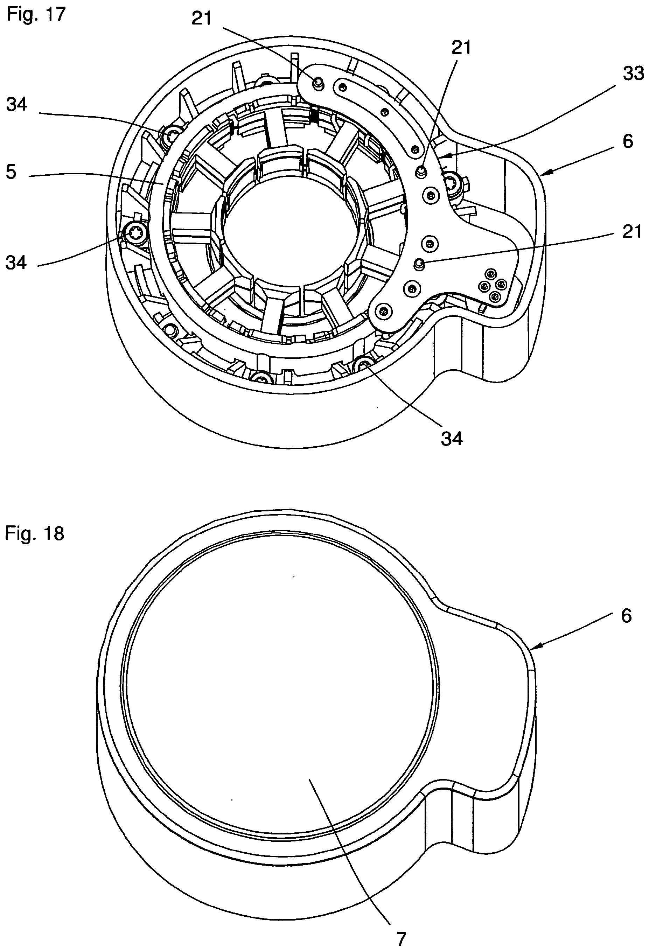

Fig. 17 zeigt die Anordnung auf Fig. 16 mit einer Leiterplatte 33, die auf den Justierstiften 21 des Isolierrings 5 gesteckt sind und die Statorwicklungen miteinander verschalten und mit den Steckerstiften 32 verbindet.

Fig. 18 zeigt die das geschlossene Motorgehäuse 6 mit einem Gehäusedeckel 7.

**Bezugszeichenliste**

| | | | |
|---|---|---|---|
| 1 | Statorpol | 34 | Schrauben |
| 2 | Endkappe ohne Schlitz | 35 | Rückschluss |
| 3 | Endkappe mit Schlitz | 36 | Ringbereich |
| 4 | Spannring | 37 | Aussparung |
| 5 | Isolierring | 38 | Anschlagring |
| 6 | Motorgehäuse | | |
| 7 | Gehäusedeckel | | |
| 8 | Anschrauböse | | |
| 9 | Sternpunktanschluss | | |
| 10 | Stator | | |
| 11 | Axialsicherungssteg | | |
| 12 | Durchbruch | | |
| 13 | Verbindungsstelle | | |
| 14 | Steg | | |
| 15 | Justagestift für Spannring | | |
| 16 | Justagedurchbruch | | |
| 17 | Schnapphaken | | |
| 18 | Brücke | | |
| 19 | Schlitz in Endkappe | | |
| 20 | Schlitz im Isolierring | | |
| 21 | Justagestift für Leiterplatte | | |
| 22 | Aufnahme für Schneidklemmkontakt | | |
| 23 | Vorsprung | | |
| 24 | Aufnahmeraum für Pol | | |
| 25 | Polkern | | |
| 26 | Polschuh | | |
| 27 | Rückschlussabschnitt | | |
| 28 | konkaves Profil | | |
| 29 | konvexes Profil | | |
| 30 | Ausnehmung | | |
| 31 | Schneidklemmkontakt | | |
| 32 | Steckerstift | | |
| 33 | Leiterplatte | | |

## Patentansprüche

1. Stator (10) für einen elektronisch kommutierten Gleichstrommotor, mit einer Mehrzahl von als Einzelteile ausgebildeten Statorpolen (1), bestehend aus einem Polkern (25), Polschuhen (26) und Rückschlussabschnitten (27), wobei die Rückschlussabschnitte (27) der Statorpole (1) ineinandergreifende Profilierungen aufweisen an welchen die Rückschlussabschnitte (27) so einander anliegen, dass sie miteinander einen hohlzylindrischen Rückschluss (35) bilden, wobei die Polkerne (25) radial nach innen gerichtet an die Rückschlussabschnitte (27) anschließen, dass die einzelnen Statorpole (1) jeweils mit einer Isolierung und einer Wicklung versehen sind und dass die bewickelten Statorpole (1) durch ein Halteteil zusammengehalten werden und das Halteteil ein metallischer Spannring (4) ist, der unter Vorspannung um den gesamten Umfang des hohlzylindrischen Rückschlusses (35) herum gelegt ist und die Statorpole (1) miteinander verspannt, **dadurch gekennzeichnet, dass** der Spannring (4) mit Anschraubösen (8) einstückig ist, die an einen Ringbereich (36) anschließen und rechtwinklig abgebogen sind.

2. Stator nach Anspruch 1, **dadurch gekennzeichnet, dass** der Spannring (4) in seiner Grundform ein Hohlzylinder mit einer Vielzahl von Durchbrüchen (12) ist, wobei Brücken (18) und Stege (14) verbleiben, welche zwei vollumfängliche Ringbereiche (36) miteinander verbinden.

3. Stator nach Anspruch 2, **dadurch gekennzeichnet, dass** die Ringbereiche (36) an mehreren Stellen radial nach innen verformt sind, so dass sie Axialsicherungsmittel (11) bilden.

4. Stator nach Anspruch 3, **dadurch gekennzeichnet, dass** die Axialsicherungsmittel (11) im Bereich von Stegen (14) angeordnet sind, die durch Aussparungen (37) von den Axialsicherungsmitteln (11) getrennt sind und die Ringbereiche (36) miteinander verbinden.

5. Stator nach Anspruch 3 oder 4, **dadurch gekennzeichnet, dass** die Axialsicherungsmittel (11) in Ausnehmungen (30) des hohlzylindrischen Rückschlusses (35) radial nach innen eingreifen wobei in einem mittleren Abschnitt der Ausnehmungen (30) sich radial nach außen erstreckende Vorsprünge (23) an den Axialsicherungsmitteln (11) anliegen.

6. Stator nach Anspruch 2, 3, 4 oder 5, **dadurch gekennzeichnet, dass** die Brücken (18) nach innen auf den hohlzylindrischen Rückschluss (35) vorgespannt sind.

7. Stator nach Anspruch 1, 2, 3 oder 4, **dadurch gekennzeichnet, dass** das Halteteil zumindest eine elektrische Verbindung zum Herstellen der Verschaltung der Wicklungen des Stators (10) umfasst.

8. Stator nach Anspruch 2, 3, 4 oder 7, **dadurch gekennzeichnet, dass** das Halteteil, in Form des Spannrings (4), mit einem Sternpunktanschluss (9) einstückig ist, der axial an einem Ringbereich (36) anschließt und über die Stirnseite der Statorpole (1) vorspringt.

9. Stator nach Anspruch-1, **dadurch gekennzeichnet, dass** der Stator (10) über den Spannring (4) mit einem Motorgehäuse (6) verschraubt, verstemmt, vernietet oder ultraschallverschweißt ist.

10. Stator nach zumindest einem der vorangehenden Ansprüche, **dadurch gekennzeichnet, dass** der Spannring (4) aus einem ursprünglich ebenen Blechstreifen besteht, deren Enden nach einem Biegeprozess miteinander verbunden sind und eine Verbindungsstelle (13) bilden.

11. Stator nach zumindest einem der vorangehenden Ansprüche, **dadurch gekennzeichnet, dass** der Spannring (4) mit einem Isolierring (5) verbunden ist, der Schlitze (20) zur Aufnahme von Wicklungsenden und Aufnahmen (22) für Schneidklemmkontakte (31)aufweist.

12. Stator nach Anspruch 11, **dadurch gekennzeichnet, dass** der Isolierring (5) mit Rastnasen versehen ist, die an einer Kante eines Ringbereichs (36) des Spannrings (4) verriegelt sind.

13. Stator nach Anspruch 11 oder 12, **dadurch gekennzeichnet, dass** der Isolierring (5) mit einer Leiterplatte (33) mechanisch verbunden ist, welche die Wicklungsenden mit dem Sternpunktanschluss (9) und Steckerstiften (32) verschaltet.

## Claims

1. Stator (10) for an electronically commutated DC motor, comprising a plurality of stator poles (1) that are configured as separate parts and consist of a pole core (25), pole shoes (26) and yoke portions (27), the yoke portions (27) of the stator poles (1) having intermeshing profiles at which the yoke portions (27) abut one another such that together they form a hollow-cylindrical yoke (35), the pole cores (25) adjoining the yoke portions (27) in a manner facing radially inwards, the individual stator poles (1) are each provided with insulation and a winding, and the wound stator poles (1) are held together by a retainer part and the retainer part is a metal clamping ring (4) that is placed around the entire circumference of the hollow-cylindrical yoke (35) in a pretensioned manner and clamp the stator poles (1) together, **characterised in that** the clamping ring (4) is formed in one piece having screw eyelets (8) that adjoin an annular region (36) and are bent down at right angles.

2. Stator according to claim 1, **characterised in that**, in its basic shape, the clamping ring (4) is a hollow cylinder having a plurality of openings (12), wherein bridges (18) and webs (14) are left, which interconnect two annular regions (36) extending around the entire circumference.

3. Stator according the claim, **characterised in that** the annular regions (36) are radially inwardly deformed at a plurality of locations such that they form axial securing means (11).

4. Stator according to claim 3, **characterised in that** the axial securing means (11) are arranged in the region of webs (14), which are separated from the axial securing means (11) by notches (37) and interconnect the annular regions (36).

5. Stator according to either claim 3 or claim 4, **characterised in that** the axial securing means (11) engage radially inwards in recesses (30) in the hollow-cylindrical yoke (35), radially outwardly extending protrusions (23) abutting the axial securing means (11) in a central portion of the recesses (30).

6. Stator according to claim 2, 3, 4 or 5, **characterised in that** the bridges (18) are pretensioned radially inwards onto the hollow-cylindrical yoke (35).

7. Stator according to claim 1, 2, 3 or 4, **characterised in that** the retainer part comprises at least one electrical connection for establishing the connection between the windings of the stator (10).

8. Stator according to claim 2, 3, 4 or 7, **characterised in that** the retainer part, in the form of the clamping ring (4), is formed in one piece with a neutral terminal (9), which axially adjoins an annular region (36) and protrudes beyond the end face of the stator poles (1).

9. Stator according to claim 1, **characterised in that** the stator (10) is screwed, caulked, riveted or ultrasonic-welded to a motor casing (6) by means of the clamping ring (4).

10. Stator according to at least one of the preceding claims, **characterised in that** the clamping ring (4) consists of an originally planar sheet metal strip, the ends of which are interconnected following a bending process and form a connection point (13).

11. Stator according to at least one of the preceding claims, **characterised in that** the clamping ring (4) is connected to an insulating ring (5) that has slots (20) for receiving winding ends and sockets (22) for insulation displacement contacts (31).

12. Stator according to claim 11, **characterised in that** the insulating ring (5) is provided with snap-in lugs, which are locked to one edge of an annular region (36) of the clamping ring (4).

13. Stator according to either claim 11 or claim 12, **characterised in that** the insulating ring (5) is mechanically connected to a printed circuit board (33), which connects the winding ends to the neutral terminal (9) and plug pins (32).

## Revendications

1. Stator (10) pour un moteur à courant continu commuté électroniquement, comprenant une pluralité de pièces polaires de stator (1) réalisées sous forme de pièces individuelles constituées d'une âme polaire (25), d'épanouissements polaires (26) et de secteurs de retour de fermeture magnétique (27), stator
dans lequel les secteurs de retour de fermeture magnétique (27) des pièces polaires de stator (1) présentent des systèmes de profil engrenant les uns avec les autres et au niveau desquels les secteurs de retour de fermeture magnétique (27) s'appliquent les uns contre les autres de manière à former ensemble, un retour de fermeture magnétique (35) cylindrique creux,
dans lequel les âmes polaires (25) se raccordent aux secteurs de retour de fermeture magnétique (27) en étant dirigées radialement vers l'intérieur,
dans lequel les pièces polaires de stator (1) individuelles sont munies chacune d'une isolation et d'un enroulement, et
dans lequel les pièces polaires de stator (1) bobinées sont maintenues regroupées par une pièce de maintien, et la pièce de maintien est un anneau de serrage (4) métallique, qui est appliqué sous précontrainte autour de la totalité de la circonférence du retour de fermeture magnétique (35) cylindrique creux, et qui serre ensemble les pièces polaires de stator (1),
**caractérisé en ce que** l'anneau de serrage (4) est réalisé d'un seul tenant avec des pattes de vissage (8), qui se raccordent à une zone annulaire (36) et sont coudées à angle droit par rapport à cette dernière.

2. Stator selon la revendication 1, **caractérisé en ce que** l'anneau de serrage (4) est, dans sa forme de base, un cylindre creux avec une pluralité d'ouvertures de passage (12), des pontets (18) et nervures (14) résiduelles reliant ensemble deux zones annulaires (36) continues sur la totalité de la circonférence.

3. Stator selon la revendication 2, **caractérisé en ce que** les zones annulaires (36) sont déformées radialement vers l'intérieur en plusieurs endroits, de manière à former ainsi un moyen d'arrêt axial (11).

4. Stator selon la revendication 3, **caractérisé en ce que** les moyens d'arrêt axial (11) sont agencés dans la zone de nervures (14) qui sont séparées, par des évidements (37), des moyens d'arrêt axial (11), et relient ensemble les zones annulaires (36).

5. Stator selon la revendication 3 ou la revendication 4, **caractérisé en ce que** les moyens d'arrêt axial (11) s'engagent, radialement vers l'intérieur, dans des encoches (30) du retour de fermeture magnétique (35) cylindrique creux, des protubérances (23) qui s'étendent radialement vers l'extérieur dans un tronçon central des encoches (30), s'appuyant contre les moyens d'arrêt axial (11) .

6. Stator selon la revendication 2, 3, 4 ou la revendication 5, **caractérisé en ce que** les pontets (18) sont précontraints vers l'intérieur sur le retour de fermeture magnétique (35) cylindrique creux.

7. Stator selon la revendication 1, 2, 3 ou la revendication 4, **caractérisé en ce que** la pièce de maintien comporte au moins une liaison électrique pour établir la mise en circuit des enroulements du stator (10) .

8. Stator selon la revendication 2, 3, 4 ou la revendication 7, **caractérisé en ce que** la pièce de maintien, sous la forme de l'anneau de serrage (4), est réalisée d'un seul tenant avec un raccord de branchement en étoile (9), qui se raccorde axialement à une zone annulaire (36) et fait saillie au-delà du côté frontal des pôles de stator (1).

9. Stator selon la revendication 1, **caractérisé en ce que** le stator (10) est relié à un carter de moteur (6) par l'intermédiaire de l'anneau de serrage (4), par vissage, sertissage, rivetage ou soudage par ultrasons.

10. Stator selon l'une au moins des revendications précédentes, **caractérisé en ce que** l'anneau de serrage (4) est constitué d'une bande de tôle initialement plate, dont les extrémités, après un processus de cintrage, sont reliées entre elles et forment une zone d'assemblage (13).

11. Stator selon l'une au moins des revendications précédentes, **caractérisé en ce que** l'anneau de serrage (4) est relié à une bague isolante (5), qui présente des fentes (20) destinées à accueillir des extrémités d'enroulements, et des logements d'accueil (22) pour des contacts de connexion auto-dénudants (31).

12. Stator selon la revendication 11, **caractérisé en ce que** la bague isolante (5) est munie de tenons d'encliquetage, qui sont verrouillés à un bord d'une zone annulaire (36) de l'anneau de serrage (4).

13. Stator selon la revendication 11 ou la revendication 12, **caractérisé en ce que** la bague isolante (5) est reliée mécaniquement à une plaque de circuit imprimé (33), qui met en circuit les extrémités d'enroulements avec le raccord de branchement en étoile (9) et des fiches de connecteur (32).
